(19) **Europäisches Patentamt / European Patent Office / Office européen des brevets**

(11) **EP 0 916 215 B1**

(12) **FASCICULE DE BREVET EUROPEEN**

(45) Date de publication et mention
de la délivrance du brevet:
**20.06.2007 Bulletin 2007/25**

(51) Int Cl.:
*H04L 25/14* (2006.01)    *H04B 7/185* (2006.01)
*H04L 27/26* (2006.01)

(21) Numéro de dépôt: **98917270.5**

(22) Date de dépôt: **27.03.1998**

(86) Numéro de dépôt international:
**PCT/FR1998/000643**

(87) Numéro de publication internationale:
**WO 1998/044688 (08.10.1998 Gazette 1998/40)**

(54) **PROCEDE DE TRANSMISSION SUR UNE PLURALITE DE SUPPORTS DE TRANSMISSION, A REPARTITION DYNAMIQUE DES DONNEES, ET EMETTEUR ET TERMINAL CORRESPONDANTS**

VERFAHREN ZUR ÜBERTRAGUNG ÜBER MEHRERE ÜBERTRAGUNGSLEITER MIT DYNAMISCHER DATENVERTEILUNG, ENTSPRECHENDER SENDER UND ENDGERÄT

METHOD FOR TRANSMITTING ON A PLURALITY OF TRANSMISSION MEDIA, WITH DYNAMIC DATA DISPATCHING, AND CORRESPONDING TRANSMITTER AND TERMINAL

(84) Etats contractants désignés:
**DE ES FI FR GB IT SE**

(30) Priorité: **28.03.1997 FR 9703892**

(43) Date de publication de la demande:
**19.05.1999 Bulletin 1999/20**

(73) Titulaire: **Alcatel Lucent**
**75008 Paris (FR)**

(72) Inventeur: **BOUSQUET, Jacques**
**F-78290 Croissy-sur-Seine (FR)**

(74) Mandataire: **Smith, Bradford Lee et al**
**Alcatel Lucent**
**Intellectual Property & Standards**
**54 rue La Boétie**
**75008 Paris (FR)**

(56) Documents cités:
**EP-A- 0 667 695        FR-A- 2 737 366**
**US-A- 5 583 851        US-A- 5 598 417**

- **CHEN Q ET AL: "MULTICARRIER CDMA WITH ADAPTIVE FREQUENCY HOPPING FOR MOBILE RADIO SYSTEMS" IEEE JOURNAL ON SELECTED AREAS IN COMMUNICATIONS, vol. 14, no. 9, décembre 1996, pages 1852-1858, XP000639647**
- **BRENDAN C ET AL: "STRIPING WITHIN THE NETWORK SUBSYSTEM" IEEE NETWORK: THE MAGAZINE OF COMPUTER COMMUNICATIONS, vol. 9, no. 4, 1 juillet 1995, pages 22-32, XP000526589**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

**Description**

Le domaine de l'invention est celui de la transmission de données issues de plusieurs sources vers plusieurs récepteurs, par l'intermédiaire d'un centre émetteur (en anglais : "gateway") unique.

L'invention s'applique par exemple, mais non exclusivement, à la diffusion de données vers des terminaux isolés et/ou difficiles d'accès, par l'intermédiaire de satellites.

Un domaine privilégié d'application de l'invention est également celui de la diffusion de données, à haut débit, par exemple dans le cadre du réseau Internet.

On connaît bien sûr de très nombreux systèmes de transmission vers plusieurs récepteurs. Les différentes informations à transmettre sont alors multiplexées entre elles.

On connaît ainsi :

- le multiplexage temporel (MRT) classique, selon lequel les données sont émises les unes à la suite des autres, selon une organisation en trames formées d'une série d'intervalles de temps alloués chacun à une des communications ;

- le multiplexage fréquentiel (MRF), selon lequel chaque communication se voit allouer une fréquence porteuse ;

- le multiplexage par codes (MRC), selon lequel les signaux de chaque communication sont émis simultanément et sur la même porteuse, après avoir été chacun multiplié par un code choisi de façon qu'il soit orthogonal avec tous les autres codes (la multiplication par ce code permettant alors, à la réception, la récupération du signal source).

L'approche MRT classique repose sur l'utilisation d'une fréquence porteuse unique, sur laquelle on réalise un multiplexage temporel.

Pour améliorer cette technique, on a pensé à utiliser simultanément deux des techniques précitées, de façon à réaliser un système MRT multiporteuse. Dans ce cas, le récepteur est informé de la fréquence porteuse qu'il doit suivre, par des données de signalisation.

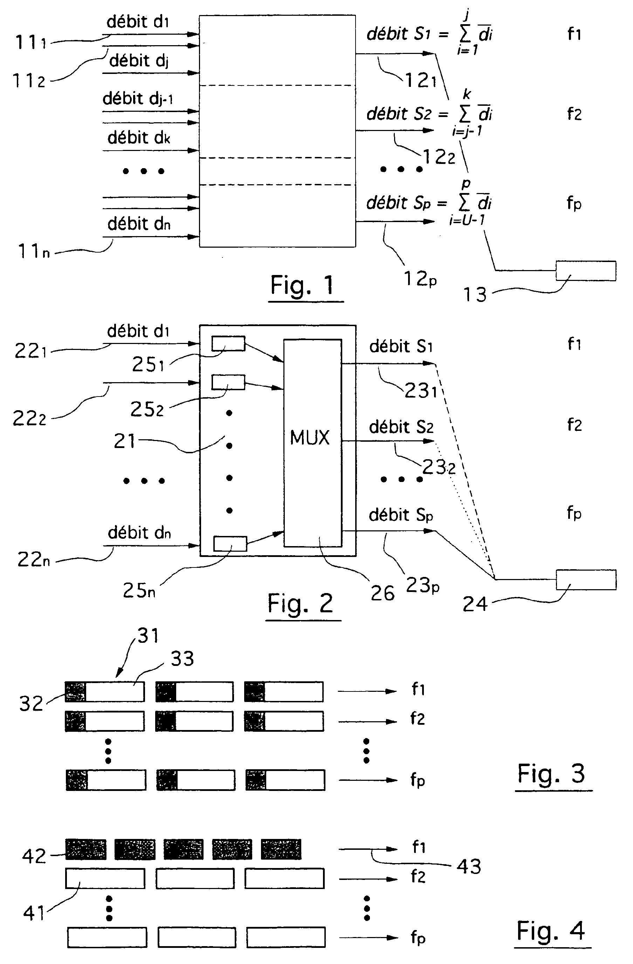

La figure 1 illustre un tel système, connu en soi.

On considère le cas de n communications à transmettre, ayant chacune un débit $d_1$ à $d_n$ donné. On prévoit p fréquences porteuses (p étant inférieur à n) pour transmettre ces communications vers n récepteurs.

Dans ce cas, chaque communication $11_1$ à $11_n$ est affectée à l'une des fréquences porteuses $12_1$ à $12_p$, pour l'ensemble de la communication. Le récepteur 13 est réglé sur la fréquence porteuse $f_i$ adéquate.

Le débit obtenu sur chaque porteuse $f_i$ est :

$$S_i = \sum_{j=1}^{n_i} \overline{d_j}$$

$n_j$ étant le nombre de communications transmises sur cette porteuse $f_i$.

Bien sûr, le débit total obtenu :

$$\sum_{i=1}^{p} S_i = \sum_{i=1}^{p} \sum_{j=1}^{n_i} \overline{d_j}$$

reste inférieur au débit potentiel S.

En effet, une telle allocation de ressources n'est pas optimale. Par exemple, si on considère le cas particulier d'une file d'attente de n serveurs avec une distribution de type Poisson, le processus suit la loi d'Erlang. Celle-ci défavorise, à nombre de circuits globaux égaux, les segmentations en petits (c'est à dire à faible nombre de serveurs) sous systèmes indépendants pour la probabilité de blocage, l'utilisation de serveurs.

L'état de l'art est également représenté par le document FR 2 737 366 qui concerne un dispositif de transmission de données issues d'une pluralité de sources vers une pluralité de récepteurs, par l'intermédiaire d'un centre émetteur unique, utilisant plusieurs sous-porteuses pour transmettre des paquets de données. Cependant ce dispositif ne prévoit pas une analyse globale de toutes les données à transmettre pour maximiser l'utilisation des ressources d'émission disponibles.

Enfin le document EP 0 667 695 décrit un procédé de transmission de données consistant à répartir les données à échanger sur une pluralité de porteuses, émises en parallèle, chaque station radio se voyant allouer de facon fixe un nombre déterminé de porteuses. Cette allocation fixe des fréquences ne permet, en conséquence, pas d'optimiser l'utilisation des ressources d'émission disponibles.

D2 = US 5 598 417 décrit le contrôle dynamique d'un canal de données dans un système de communication sans fil avec repartition dans le temps.

D3 = US 5 583 851décrit un appareil pour des communications mobiles ayant une fonction d'allocation de codes multiples.

D4 = CHEN Q et al., : "Multicarrier CDMA with Adaptive Frequency Hopping for Mobile Radio Systems"; IEEE Journal in Selected Areas in Communications, vol. 14, no. 9, Décembre 1996écembre 1996 (1996-12), PP. 1852- 1858, xp000639647, décrit un autre système avec multi-porteuses répartition multiple d'accès par codes, et sauts de fréquences.

L'invention a notamment pour objectif de pallier ces inconvénients de l'état de l'art.

Plus précisément, un objectif de l'invention est de fournir un procédé de transmission sur plusieurs fréquences porteuses adapté à la transmission de plusieurs flux de données vers des récepteurs distincts, qui maximise l'utilisation des ressources d'émission disponibles.

Notamment, un objectif de l'invention est de fournir un tel procédé adapté à la transmission de signaux de données organisés en blocs ou pacquets, telles que par exemple des données diffusées sur le réseau internet.

Un autre objectif de l'invention est de fournir un tel procédé qui n'induise pas, bien sûr, d'augmentation importante de la complexité et/ou des coûts de revient des teminaux correspondants.

Ces objectives, ainsi que d'autres qui apparaîtront par la suite, son atteints selon linvention telle que décrite dans la revendication une et suivantes.

L'invention assure ainsi une allocation dynamique globale, qui permet d'optimiser l utilisation de la ressource radio.

De façon avantageuse, lesdites données sont organisées en paquets de données, chaque paquet étant émis sur un support de transmission prédéterminé.

Les informations de destination précisant le récepteur destinataire d'un paquet de données peuvent être transmises :

- dans ledit paquet lui-même, sous la forme d'un entête de paquet ; ou

- par le biais d'un support de transmission dédié à la transmission d'informations de destination.

Il peut notamment s'agir de paquets selon le protocole de transfert de données Internet.

L'invention s'avère notamment avantageuse dans les situations où le nombre desdits supports de transmission est très inférieur au nombre desdites sources (par exemple un pour quelques dizaines).

L'invention concerne également un émetteur pour système de transmission de données issues d'une pluralité de sources vers une pluralité de récepteurs, comprenant :

- des moyens de transmission mettant en oeuvre au moins deux supports de transmission de données distincts, lesdits récepteurs pouvant recevoir sélectivement des données transmises sur l'un quelconque de ces supports de transmission ;

- des moyens de répartition dynamique desdites données à transmettre sur lesdits supports de transmission en fonction d'une analyse globale de l'ensemble desdites données à transmettre ; et

- des moyens de génération de données de signalisation précisant régulièrement à chacun desdits récepteurs le ou les supports de transmission qu'il doit utiliser.

Avantageusement, un tel émetteur comprend de plus des moyens de mémorisation temporaire de blocs de données destinés à un desdits récepteurs.

Il est ainsi optimisé pour le transfert de paquets de données.

L'invention concerne encore les terminaux émetteur/récepteur mis en oeuvre dans le cadre du procédé décrit plus haut. Ces terminaux comprennent notamment des moyens de réception de données émises, en réponse à une requête, selon un procédé de transmission mettant en oeuvre au moins deux supports de transmission de données distincts, ledit terminal pouvant recevoir sélectivement des données transmises sur l'un quelconque de ces supports de transmission, et assurant une répartition dynamique desdites données à transmettre sur lesdits supports de transmission en fonction d'une analyse globale de l'ensemble desdites données à transmettre, des données de signalisation précisant régulièrement audit terminal le ou les supports de transmission qu'il doit utiliser.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, dans lesquels :

- la figure 1, déjà commentée en préambule, présente un système MRT multiporteuse classique ;

- la figure 2 illustre un système à allocation dynamique globale selon l'invention, de façon générale ;

- les figures 3 et 4 illustrent deux modes de diffusion des informations de destination de paquets émis par le système de la figure 2.

La figure 2 illustre donc le principe général de l'invention. L'émetteur ("gateway") 21 reçoit des données à transmettre de n sources distinctes $22_1$ à $22_n$, correspondant par exemple à des informations à transmettre à un utilisateur, en réponse à une requête transmise à un serveur Internet.

L'émetteur 21 répartit les données reçues sur les p fréquences porteuses $23_1$ à $23_p$ dont il dispose. Chaque récepteur 24 mono-fréquence adapte sa fréquence de démodulation de façon à recevoir la fréquence porteuse $23_i$ sur laquelle une information qui lui est destinée a été émise.

L'approche nouvelle de l'invention repose sur le fait que les récepteurs 24 ne sont pas figés sur une unique porteuse. En effet, l'émetteur optimise la répartition des données selon une approche globale. En conséquence, les données d'une même communication sont réparties sur plusieurs fréquences porteuses, au cours du temps, et le récepteur 24 s'adapte par sauts de fréquence.

Cette souplesse au niveau de l'émission, appelée allocation dynamique globale permet d'obtenir un débit global S égal à la somme des débits de chaque fréquence porteuse. On optimise donc l'utilisation des ressources radio.

Les données reçues sur chaque entrée $22_i$ sont stockées temporairement dans une mémoire tampon $25_i$, pour former des paquets de données, par exemple selon le protocole Internet. Lorsque le paquet est complet, il est transmis à un multiplexeur 26, qui le dirige vers la fréquence porteuse choisie.

Les informations précisant le récepteur destinataire d'un paquet de données peuvent être transmises dans chaque paquet, ainsi que cela est illustré en figure 3. Les paquets 31 comprennent chacun un en-tête 32, qui précise notamment l'identité du destinataire, et un champ de données. Les récepteurs reçoivent les paquets, lisent les en-têtes, puis le champ de données, s'ils sont destinataires du paquets.

On peut également prévoir que les paquets émis 41 ne comprennent que des données utiles, ainsi que cela est illustré en figure 4. Dans ce cas, les informations 42 précisant le récepteur destinataire d'un paquet de données peuvent être transmises par le biais d'un (ou plusieurs) support de transmission 43 dédié à la transmission d'informations de destination.

Le mode de réalisation décrit ci-dessus est basé sur la mise en oeuvre de plusieurs fréquences porteuses. Il est clair cependant que celles-ci peuvent être remplacées par un autre type de support de transmission, et notamment par un système MRC. Dans ce cas, on dispose à l'émission de p codes, au lieu de p fréquences porteuses.

Il est également possible de cumuler les deux techniques, en utilisant simultanément plusieurs codes et plusieurs fréquences porteuses (système MRC/MRF).

Par ailleurs, il est à noter que, bien que le mode de réalisation décrit présente des récepteurs pouvant recevoir une seule porteuse (ou décoder un seul code), l'invention s'applique également aux situations dans lesquelles le récepteur peut recevoir simultanément des données transmises sur plusieurs (en général un nombre relativement limité) supports de transmission.

**Revendications**

1. Procédé de transmission de données issues d'une pluralité de sources ($22_i$) vers une pluralité de récepteurs (24), par l'intermédiaire d'un centre émetteur unique (21) mettant en oeuvre au moins deux fréquences porteuses distinctes ($23_i$) de données, lesdits récepteurs (24) pouvant recevoir sélectivement des données transmises sur l'une quelconque de ces fréquences porteuses ($23_i$), **caractérisé en ce qu'**il assure une répartition dynamique desdites données à transmettre sur lesdites fréquences porteuses ($23_i$) en fonction d'une analyse globale de l'ensemble desdites données à transmettre, des données de signalisation (32 ; 42) précisant régulièrement à chacun desdits récepteurs (24) le ou les fréquences porteuses ($23_i$) qu'il doit utiliser.

2. Procédé selon la revendication 1, **caractérisé en ce que** lesdites données sont organisées en paquets de données (31 ; 41), chaque paquet étant émis sur une des fréquences porteuses prédéterminée.

3. Procédé selon la revendication 2, **caractérisé en ce que** des informations précisant le récepteur destinataire d'un paquet de données (31; 41) sont transmises :

   - dans ledit paquet lui-même, sous la forme d'un en-tête (32) de paquet ; ou
   - par le biais d'une des fréquences porteuses (43) dédiée à la transmission d'informations de destination.

4. Procédé selon l'une quelconque des revendications 1 à 3, **caractérisé en ce que** le nombre desdites fréquences porteuses ($23_i$) est très inférieur au nombre desdites sources ($22_i$).

5. Emetteur pour système de transmission de données issues d'une pluralité de sources ($22_i$) vers une pluralité de récepteurs (24), **caractérisé en ce qu'**il comprend:

   - des moyens (21) de transmission mettant en oeuvre au moins deux fréquences porteuses de données distinctes ($23_i$), lesdits récepteurs (24) pouvant recevoir sélectivement des données transmises sur l'une quelconque de ces fréquences porteuses ($23_i$) ;
   - des moyens (21) de répartition dynamique desdites données à transmettre sur lesdites fréquences porteuses ($23_i$) en fonction d'une analyse globale de l'ensemble desdites données à transmettre ; et
   - des moyens de génération de données de signalisation (32 ; 42) précisant régulièrement à chacun desdits récepteurs (24) la ou les fréquences porteuses ($23_i$) qu'il doit utiliser.

6. Emetteur selon la revendication 5, **caractérisé en ce qu'**il comprend de plus des moyens ($25_i$) de mémorisation temporaire de blocs de données destinés à un desdits récepteurs (24).

7. Terminal émetteur/récepteur, **caractérisé en ce qu'**il comprend des moyens de réception de données émises, en réponse à une requête, selon un procédé de transmission mettant en oeuvre au moins deux fréquences porteuses de données distinctes ($23_i$), ledit terminal pouvant recevoir sélectivement des données transmises sur l'un quelconque de ces fréquences porteuses ($23_i$), et assurant une répartition dynamique desdites données à transmettre sur lesdites fréquences porteuses ($23_i$) en fonction d'une analyse globale de l'ensemble desdites données à transmettre, des données de signalisation (32 ; 42) précisant régulièrement audit terminal le ou les fréquences porteuses qu'il doit utiliser.

## Claims

1.  A method of transmitting data from a plurality of sources ($22_i$) to a plurality of receivers (24) via a single gateway (21) using at least two separate data carrier frequencies ($23_i$), said receivers (24) being able to receive selectively data transmitted on any of said carrier frequencies ($23_i$), the method being **characterized in that** it assures dynamic distribution of said data to be transmitted to said carrier frequencies ($23_i$) in accordance with a global analysis of all of said data to be transmitted, signalling data (32; 42) regularly specifying to each of said receivers (24) the transmission medium or media ($23_i$) it is to use.

2.  A method according to claim 1, **characterized in that** said data is organized into data packets (31; 41), each packet being transmitted on one of the predetermined carrier frequencies.

3.  A method according to claim 2, **characterized in that** information specifying the receiver to which a data packet (31; 41) is addressed is transmitted:

    · in said packet itself in the form of a packet header (32); or
    · by means of one of the carrier frequencies (43) dedicated to transmitting destination information.

4.  A method according to any one of claims 1 to 3, **characterized in that** the number of carrier frequencies ($23_i$) is very much lower than the number of sources ($22_i$).

5.  A transmitter for a system for transmitting data from a plurality of sources ($22_i$) to a plurality of receivers (24), the transmitter being **characterized in that** it comprises:

    · transmission means (21) using at feast two separate data carrier frequencies ($23_i$), said receivers (24) being able to receive selectively data transmitted on any one of said carrier frequen-

cies ($23_i$);
    · means (21) for dynamically distributing said data to be transmitted to said carrier frequencies ($23_i$) in accordance with a global analysis of all of said data to be transmitted; and
    · means for generating signalling data (32; 42) regularly specifying to each of said receivers (24) the carrier frequency or frequencies ($23_i$) it is to use,

6.  A transmitter according to claim 5, **characterized in that** it further comprises means ($25_i$) for temporarily storing blocks of data addressed to one of said receivers (24).

7.  A transmitter/receiver terminal, **characterized in that** it comprises means for receiving data transmitted in response to a request using a transmission method employing at least two separate data carrier frequencies ($23_i$), said terminal being adapted to receive selectively data transmitted on any one of said carrier frequencies ($23_i$) and assuring dynamic distribution of said data to be transmitted to said carrier frequencies ($23_i$) in accordance with a global analysis of all of said data to be transmitted, signalling data (32; 42) regularly specifying to said terminal the carrier frequency or frequencies that it is to use.

## Patentansprüche

1.  Verfahren zur Übertragung von Daten aus einer Vielzahl von Quellen ($22_i$) zu einer Vielzahl von Empfängern (24) über eine einzige Sendezentrale (21) unter Nutzung von mindestens zwei unterschiedlichen Daten-Tragerfrequenzen ($23_i$), wobei die Empfänger (24) selektiv auf einer beliebigen dieser Trägerfrequenzen ($23_i$) übertragene Daten empfangen können,

    **dadurch gekennzeichnet, dass** es eine dynamische Verteilung der auf den Trägerfrequenzen ($23_i$) zu übertragenden Daten in Abhängigkeit von einer Gesamtanalyse der zu übertragenden Daten sicherstellt,

    wobei Signalisierungsdaten (32, 42) regelmäßig jedem der Empfänger (24) genau die eine oder mehrere Trägerfrequenzen ($23_i$) angeben, die er verwenden soll.

2.  Verfahren nach Anspruch 1, **dadurch gekennzeichnet, dass** die Daten in Datenpaketen (31, 41) organisiert sind, wobei jedes Paket auf einer zuvor festgelegten [Frequenz] der Trägerfrequenzen gesendet wird,

3.  Verfahren nach Anspruch 2, **dadurch gekennzeichnet, dass** Informationen zur genauen Bestimmung des Zielempfängers eines Datenpakets (31;

41) übertragen werden:

> - in dem Paket selbst in Form eines Paket-Headers (32); oder
> - über eine der Trägerfrequenzen (43), die eigens für die Übertragung von Zielinformationen reserviert ist.

4. Verfahren nach einem beliebigen der Ansprüche 1 bis 3, **dadurch gekennzeichnet, dass** die Anzahl der Trägerfrequenzen ($23_i$) deutlich kleiner ist als die Anzahl der Quellen ($22_i$).

5. Sender für ein System zur Übertragung von Daten aus einer Vielzahl von Quellen ($22_i$) zu einer Vielzahl von Empfängern (24), **dadurch gekennzeichnet, dass** er umfasst:

> - Übertragungsvorrichtungen (21), die mindestens zwei unterschiedliche Trägerfrequenzen ($23_i$) nutzen, wobei die Empfänger (24) selektiv auf einer beliebigen dieser Trägerfrequenzen ($23_i$) übertragene Daten empfangen können;
> - Vorrichtungen (21) zur dynamischen Verteilung der auf den Trägerfrequenzen ($23_i$) zu übertragenden Daten in Abhängigkeit von einer Gesamtanalyse von sämtlichen der zu übertragenden Daten; und
> - Vorrichtungen zur Generierung von Signalisierungsdaten (32; 42), die jedem der Empfänger (24) regelmäßig genau die eine oder mehrere Trägerfrequenzen ($23_i$) angeben, die er verwenden soll.

6. Sender nach Anspruch 5, **dadurch gekennzeichnet, dass** er außerdem Vorrichtungen ($25_i$) zur vorübergehenden Speicherung von für einen der Empfänger (24) bestimmten Datenblöcken umfasst.

7. Sende/Empfangs-Endgerat, **dadurch gekennzeichnet, dass** es Empfangsvorrichtungen für Daten umfasst, die als Antwort auf eine Anforderung gemäß einem Übertragungsprotokoll gesendet werden, wobei mindestens zwei unterschiedliche Daten-Trägerfrequenzen ($23_i$) genutzt werden, wobei das Endgerät selektiv auf einer beliebigen dieser Trägefrequenzen ($23_i$) Übertragene Daten empfangen kann und wobei es eine dynamische Verteilung der auf den Trägerfrequenzen ($23_i$) zu übertragenden Daten in Abhängigkeit von einer Gesamtanalyse sämtlicher der zu übertragenden Daten sicherstellt, wobei Signalisierungsdaten (32; 42) dem Endgerät regelmäßig genau die eine oder mehrere Trägerfrequenzen ($23_i$) angeben, die es verwenden soll.

$11_1$ débit $d_1$

$11_2$ débit $d_j$

débit $d_{j-1}$

débit $d_k$

· · ·

débit $d_n$

$11_n$

débit $S_1 = \sum_{i=1}^{j} \overline{d_i}$    f1

$12_1$

débit $S_2 = \sum_{i=j-1}^{k} \overline{d_i}$    f2

· · · $12_2$

débit $S_p = \sum_{i=U-1}^{p} \overline{d_i}$    fp

$12_p$

13

## Fig. 1

$22_1$ débit $d_1$

$25_1$

$22_2$

$25_2$

21

· · ·

débit $d_n$

$22_n$

$25_n$

MUX

26

débit $S_1$    f1

$23_1$

débit $S_2$    f2

· · · $23_2$

débit $S_p$    fp

$23_p$

24

## Fig. 2

31

33

32

→ f1

→ f2

→ fp

## Fig. 3

42

43

41

→ f1

→ f2

→ fp

## Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2737366
- EP 0667695 A
- US 5598417 A
- US 5583851 A

**Littérature non-brevet citée dans la description**

- **CHEN Q et al.** Multicarrier CDMA with Adaptive Frequency Hopping for Mobile Radio Systems. IEEE Journal in Selected Areas in Communications, Décembre 1996, vol. 14, 1852-1858